# EUROPÄISCHE PATENTSCHRIFT

(11) **EP 2 772 719 B1**
(45) Veröffentlichungstag und Bekanntmachung des Hinweises auf die Patenterteilung: **19.09.2018**
(21) Anmeldenummer: 14000634.7
(22) Anmeldetag: 24.02.2014
(51) Int. Cl.: G01S 17/32, G01S 17/58, G01S 17/02, G01J 5/10, G01S 17/42, F41G 7/00, F41G 7/22, G01S 7/481

(54) **Optische Vorrichtung**
Optical device
Dispositif optique

(30) Priorität: 02.03.2013 DE 102013003660
(43) Veröffentlichungstag der Anmeldung: 03.09.2014
(73) Patentinhaber: MBDA Deutschland GmbH, 86529 Schrobenhausen (DE)
(72) Erfinder: Senft, Christoph, 80333 München (DE); Fendt, Alfred, 81479 München (DE); Zoz, Jürgen, 86316 Friedberg (DE)
(74) Vertreter: Isarpatent

(56) Entgegenhaltungen:
- DE-A1- 2 908 231
- DE-A1- 3 219 533
- US-A- 3 360 987
- US-A1- 2006 231 771

## Beschreibung

Die vorliegende Erfindung betrifft eine optische Vorrichtung, insbesondere zur Verwendung in Suchköpfen von Flugkörpern. Aus dem Stand der Technik sind passive Infrarotsuchköpfe für Flugkörper bekannt, die beispielsweise Raketen oder andere zu erfassende Zielobjekte anhand ihrer optischen Signatur erkennen können. Diese Signaturen repräsentieren die Verteilung von reflektierter oder emittierter Strahlungsintensität auf der Zieloberfläche. Sie ermöglichen eine Erkennung von Zielobjekten durch den Suchkopf und deren grobe Ortung im zweidimensionalen Winkelraum, liefern aber nur sehr ungenaue Informationen über den Bewegungszustand, die Entfernung und die dreidimensionale Gestalt dieser Zielobjekte.

Insbesondere bei dynamischen Zielen könnte durch eine zeitlich hochaufgelöste Messung ihrer Distanz zum Suchkopf und ihre Relativbewegung in allen drei Freiheitsgraden die Treffergenauigkeit verbessert werden. Ebenso könnte durch die Erfassung der Tiefendimension des betreffenden Zielobjekts zusammen mit der Messung der Lagewinkelgeschwindigkeit, die Klassifizierung und die Ziel-Falschziel-Diskriminierung unterstützt werden.

Aus dem Stand der Technik ist bekannt, dass passive Suchköpfe, um die zuvor genannten Vorteile zu erreichen, von Radarsensoren unterstützt werden. Die Radarsensoren helfen, die Informationen über Zielobjekte deutlich zu verbessern. Jedoch sind Radarsensoren aufgrund ihrer Größe und ihrer Architektur nur schwer in einen Suchkopf zu integrieren und werden daher beispielsweise oft als externe Sensoren unabhängig von dem Suchkopf bereitgestellt.

Eine optische Vorrichtung gemäß dem Oberbegriff des Anspruchs 1 ist aus der DE 32 19 533 A1 bekannt. Weiterhin ist aus der US 2006/0231771 A1 ein LIDAR-System bekannt, mit dem Luftziele erfassbar sind. Schließlich offenbart die DE 29 08 231 A1 ein Zielortungsverfahren, bei dem ein Laserstrahl das Ziel automatisch verfolgt und gleichzeitig als Freund-Feind-Erkennungssignal, Flugkörperleitstrahl und Zielmarkierer dient.

Des Weiteren beschreibt die Druckschrift US 3 360 987 ein optisches System zur Bestimmung der Vibrationsfrequenz eines entfernten Gegenstands durch Aussenden eines kohärenten Lichtstrahls und Isolieren eines auf der durch Reflektion an einem vibrierenden Körper entstehenden Frequenzveränderung basierenden Signals.

Es ist Aufgabe der Erfindung, ein optisches System bereitzustellen, mit dem insbesondere ein Suchkopf betreibbar ist, wobei das optische System bei kostengünstiger Herstellung und Montage eine zuverlässige und ausführliche Bereitstellung von Zielinformationen ermöglicht.

Gelöst wird die Aufgabe durch die Merkmale des Anspruchs 1. Dieser umfasst eine optische Vorrichtung, die insbesondere in einem Suchkopf eines Flugkörpers verwendbar ist. Die optische Vorrichtung umfasst zumindest einen optischen Sensor mit mehreren Pixeln, zumindest eine Lichtquelle, zumindest eine Detektionsvorrichtung und ein optisches System. Die Lichtquelle ist erfindungsgemäß derart eingerichtet, dass diese durch das optische System einen Gegenstand beleuchtet. Für die Beleuchtung mit der Lichtquelle ist vorgesehen, dass der Gegenstand durch das optische System mindestens auf einen Teilbereich eines vordefinierten Pixels des optischen Sensors abbildbar ist. Auf diese Weise sind Lichtquelle und optischer Sensor gekoppelt, was bedeutet, dass bei der optischen Vorrichtung von vornhinein bekannt ist, welcher Pixel des optischen Sensors denjenigen Bereich der Umgebung abbildet, der von der Lichtquelle beleuchtbar ist. Diese optische (Achs-)Harmonisierung ist bevorzugt durch einen Retroreflektor realisiert, über den die Lichtquelle den optischen Sensor, mit einer passenden Wellenlänge beleuchten kann. Sollte der zu beleuchtende Bereich kleiner als ein Pixel des optischen Sensors sein, so ist die Lichtquelle zusammen mit der Detektionsvorrichtung bevorzugt eingerichtet, denjenigen Teil des Pixels zu bestimmen, der den Bereich abbildet, d.h. den Ablagewinkel des Ziels mit Subpixelgenauigkeit zu bestimmen. Die Detektionsvorrichtung ist eingerichtet, das von der Lichtquelle ausgesandte und an dem Gegenstand reflektierte Licht zu detektieren. Insbesondere ist die Detektionsvorrichtung eingerichtet, das reflektierte Licht durch das optische System zu detektieren. Bevorzugt ist vorgesehen, dass mittels geeigneter Modulationsverfahren, wie beispielsweise der Frequenz, der Polarisation, der Phase oder der Amplitude, eine sehr genaue Messung der Entfernung und/oder des In-Range-Profils möglich ist. Weiterhin ermöglicht die optische Vorrichtung durch eine Dopplerauswertung, die Geschwindigkeit und/oder das Geschwindigkeitsprofil des Gegenstands zu ermitteln. Schließlich bildet die optische Vorrichtung bevorzugt ein sehr kompaktes Bauteil, das in einem Suchkopf eines Flugkörpers einsetzbar ist.

Zusätzlich betrifft die Erfindung ein Verfahren zum Betreiben eines Suchkopfs eines Flugkörpers, wobei der Suchkopf zumindest einen optischen Sensor mit mehreren Pixeln, zumindest eine Lichtquelle und zumindest eine Detektionsvorrichtung umfasst. Weiterhin beinhaltet der Suchkopf ein optisches System, wobei die Lichtquelle eingerichtet ist, durch das optische System einen Gegenstand zu beleuchten, und wobei der Gegenstand durch das optische System zumindest auf einem vordefinierten Pixel des optischen Sensors abbildbar ist. Weiterhin ist die Detektionsvorrichtung eingerichtet, das von der Lichtquelle ausgesandte und an dem Gegenstand reflektierte Licht zu detektieren. Das erfindungsgemäße Verfahren umfasst die folgenden Schritte: Zunächst wird ein Ziel mittels des optischen Sensors oder bevorzugt mittels eines Infrarotsensors erfasst und eine erste Richtung, in der sich das Ziel relativ zu dem Flugkörper befindet, ausgegeben. Dies geschieht, sobald eine Entfernung zwischen Ziel und Flugkörper einen ersten vordefinierten Wert unterschreitet. Anschließend wird das Ziel mittels der Lichtquelle beleuchtet, sobald die Entfernung zwischen Ziel und Flugkörper einen zweiten vordefinierten Wert unterschreitet. Das von der Lichtquelle ausgesandte und von dem Ziel reflektierte Licht wird anschließend von der Detektionsvorrichtung detektiert. Schließlich wird, insbesondere mittels Laufzeitmessung und/oder Modulationsverfahren, eine Entfernung zwischen Ziel und Flugkörper bestimmt und/oder eine zweite Richtung bestimmt, in der sich das Ziel relativ zu dem Flugkörper befindet, und/oder, insbesondere mittels Dopplerverfahren, eine Relativgeschwindigkeit zwischen Ziel und Flugkörper bestimmt. Bevorzugt ist dabei vorgesehen, dass die erste Richtung lediglich eine grobe Richtung darstellt, in der sich das Ziel relativ zu dem Flugkörper befindet, während die zweite Richtung insbesondere eine genauere Richtungsangabe als die erste Richtung darstellt. So kann der optische Sensor bevorzugt erkennen, wo sich das Ziel relativ zu dem Flugkörper befindet, während mittels der Lichtquelle und der Detektionsvorrichtung eine genaue Messung innerhalb der von dem optischen Sensor vorgegebenen Richtung durchgeführt werden kann. Die zweite Richtung kann daher sehr schnell bestimmt werden, da die Lichtquelle und die Detektionsvorrichtung bereits im Wesentlichen darüber informiert sind, wo sich das Ziel befinden muss. In vorteilhafter Weise stehen durch die Beleuchtung des Ziels mittels der Lichtquelle und die Detektion des reflektierten Lichts präzise Informationen über die Relativgeschwindigkeit und/oder die Entfernung und/oder die Unterscheidung zwischen Ziel und Falsch-Ziel anhand von Dopplerprofilen und/oder In-Range-Profilen zur Verfügung. Somit kann durch das erfindungsgemäße Verfahren einem Flugkörper eine Vielzahl an Informationen zur Verfügung gestellt werden, so dass eine genaue Leitung des Flugkörpers zu dem Ziel möglich wird.

Die Unteransprüche haben bevorzugte Weiterbildungen der Erfindung zum Inhalt.

Bevorzugt ist vorgesehen, dass die Lichtquelle eine Laserquelle ist. Besonders bevorzugt ist die Laserquelle eine Infrarot-Laserquelle. Beispielsweise kann die Laserquelle kohärente kontinuierliche und/oder kohärente gepulste Strahlung mit hoher Spitzenleistung aussenden. Auf diese Weise kann die Reichweite, mit der die Detektionsvorrichtung reflektiertes Licht der Lichtquelle detektieren kann, gesteigert werden. Außerdem kann bevorzugt die Detektionsvorrichtung die Laufzeit der einzelnen Pulse bestimmen, um somit Entfernungsmessungen durchzuführen. Durch weitere Untersuchungen des reflektierten Lichts der Lichtquelle kann die Detektionsvorrichtung außerdem bevorzugt Daten liefern, die für die Bestimmung der Relativgeschwindigkeit des Gegenstands zu der optischen Vorrichtung nötig sind.

Die optische Vorrichtung ist vorteilhafterweise derart ausgestaltet, dass das optische System einen dichroitischen Strahlteiler aufweist, der eingerichtet ist, optische Strahlungen zu dem optischen Sensor oder der Detektionsvorrichtung aus einem gemeinsamen Strahlengang zu trennen und/oder eingerichtet ist, das Licht der Lichtquelle in den gemeinsamen Strahlengang zu integrieren. Durch die Verwendung des optischen Systems zum Trennen und/oder Integrieren der optischen Strahlungen ist eine kompakte Bauweise der optischen Vorrichtung möglich. Außerdem ist es durch die Verwendung des Strahlteilers insbesondere möglich, mehreren Komponenten denselben Blickwinkel auf die Umgebung zu ermöglichen. Eine Kontrolle dieser Harmonisierung ist bevorzugt durch den zuvor beschriebenen Retroreflektor möglich.

Vorteilhafterweise weist das optische System eine Linsenoptik und/oder eine Spiegeloptik auf. Das Spiegeloptik weist bevorzugt eine Brennweite von 600 mm und weist bevorzugt einen Durchmesser von 300 mm auf. Weiterhin ist bevorzugt vorgesehen, dass das Spiegelteleskop den zuvor beschriebenen gemeinsamen Strahlengang auf das optische System projiziert.

In einer weiteren vorteilhaften Ausführungsform der Erfindung ist die Detektionsvorrichtung mit einer Steuervorrichtung verbunden. Die Steuervorrichtung ist bevorzugt eingerichtet, eine heterodyne und/oder besonders bevorzugt auch eine homodyne Detektion der empfangenen optischen Strahlung auszuführen. Die heterodyne Detektion erlaubt eine hohe Reichweite, mit der die Lichtquelle den Gegenstand beleuchten kann und mit der die Detektionsvorrichtung das von der Lichtquelle ausgesandte und von dem Gegenstand reflektierte Licht detektieren kann. Weiterhin erlaubt die heterodyne Detektion vorteilhaft das Ermitteln von Geschwindigkeitsinformationen und/oder Profilinformationen des Gegenstands. Zur Durchführung der heterodynen Detektion wird das von der Detektionsvorrichtung empfangene Licht in ein elektrisches Signal gewandelt, das bevorzugt an die Steuervorrichtung ausgegeben wird.

Weiterhin ist bevorzugt vorgesehen, dass die Detektionsvorrichtung einen oder mehrere Pixel aufweist. Die Verwendung von mehreren Pixeln erlaubt die Auslegung als abbildenden Sensor, so dass die Detektionsvorrichtung mit jedem vorhandenen Pixel eine eigene Detektion des am Gegenstand reflektierten Lichts ausführen kann. Daher kann innerhalb des Detektionsbereichs der Detektionsvorrichtung zwischen unterschiedlichen Lichtintensitäten differenziert werden. Weiterhin sind mit den Pixeln bevorzugt einzelne Geschwindigkeiten und/oder Entfernungen und/oder Profile messbar. Alternativ oder zusätzlich kann die Detektionsvorrichtung zumindest einen Lichtleiter, insbesondere eine Glasfaser, aufweisen, so dass eine flexible räumliche Anordnung der Detektionsvorrichtung möglich ist.

Die Erfindung betrifft weiterhin einen Suchkopf für einen Flugkörper, der eine optische Vorrichtung, wie zuvor beschrieben, umfasst. Die optische Vorrichtung kann vorteilhaft sehr kompakt aufgebaut werden, wodurch sich diese bevorzugt als Teil eines Suchkopfs eignet. Weiterhin ist durch die Lichtquelle und die Detektionsvorrichtung neben dem optischen Sensor eine weitere Messvorrichtung vorhanden, mit der der Suchkopf den Flugkörper optimal leiten kann.

Bevorzugt wird das erfindungsgemäße Verfahren durchgeführt, indem die Detektionsvorrichtung das detektierte Licht als erstes Signal ausgibt, das mit einem als vordefinierten harmonischen Oszillator ausgelegten Signal gemischt wird. Auf diese Weise entsteht ein Zwischensignal, das bevorzugt dazu verwendet wird, eine Amplitude und/oder eine Frequenz und/oder eine Phase des ersten Signals zu bestimmen. Das Mischen erfolgt bevorzugt optisch, besonders bevorzugt mit dem Licht der Lichtquelle. Auf diese Weise wird eine homodyne Detektion realisiert. Alternativ ist besonders bevorzugt vorgesehen, dass das Mischen mit einer weiteren Lichtquelle erfolgt. In diesem Fall ist eine heterodyne Detektion realisiert. Das Mischen des ersten Signals mit dem zweiten Signal erlaubt aufgrund der besseren Auswertbarkeit des Zwischensignals, eine sehr genaue Auswertung des ersten Signals und damit eine sehr hohe Reichweite der Detektionsvorrichtung. Insbesondere wenn das erste Signal ein hochfrequentes und damit technisch schwer handzuhabendes Signal ist, bietet die Mischung mit dem zweiten Signal einen vorteilhaften Weg, die Parameter des ersten Signals zu bestimmen.

Bevorzugt beträgt der erste vordefinierte Wert zumindest 600 km und/oder der zweite vordefinierte Wert zumindest 35 km. Somit kann der optische Sensor bereits sehr früh eine erste Richtung bestimmen, während die genauere Bestimmung der zweiten Richtung durch die Detektionsvorrichtung und die Lichtquelle erst später erfolgen kann, wenn sich die Entfernung zwischen Flugkörper und Ziel verringert hat.

Die Erfindung wird nun anhand von Ausführungsbeispielen unter Berücksichtigung der beigefügten Zeichnungen weiter erläutert. Dabei zeigen:
- Fig. 1: einen schematischen Aufbau der optischen Vorrichtung gemäß einem Ausführungsbeispiel der Erfindung, und
- Fig. 2: eine schematische Darstellung der heterodynen Detektion, wie diese die optische Vorrichtung gemäß dem Ausführungsbeispiel der Erfindung verwendet.

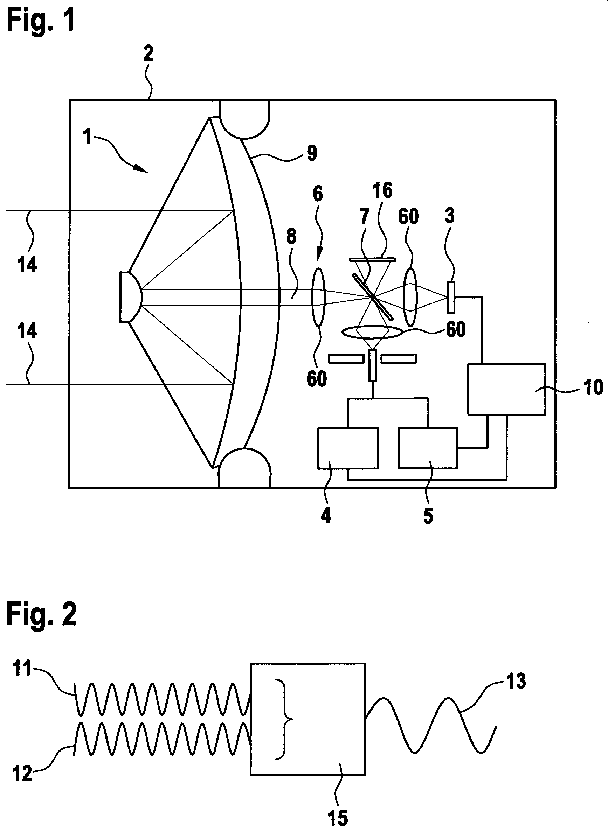

Fig. 1 zeigt eine optische Vorrichtung 1, die insbesondere Teil eines Suchkopfes 2 eines Flugkörpers sein kann. Die optische Vorrichtung 1 umfasst ein Spiegelteleskop 9, das optische Strahlungen 14 aus der Umgebung der optischen Vorrichtung 1 bündelt und diese als einen gemeinsamen Strahlengang 8 an ein optisches System 6 weiterleitet. Das optische System 6 umfasst mehrere Linsen 60 sowie einen dichroitischen Strahlteiler 7 und ist eingerichtet, den gemeinsamen Strahlengang 8 aufzuteilen, um diesen zu einem optischen Sensor 3 und zu einer Detektionsvorrichtung 5 zu leiten. Der optische Sensor 3 ist insbesondere ein Infrarotsensor mit mehreren Pixeln, der ein Ziel anhand dessen optischer Signatur erkennen kann. Diese Signatur repräsentiert insbesondere die Verteilung von reflektierter oder emittierter Strahlungsintensität auf der Zieloberfläche.

Weiterhin ist es durch den dichroitischen Strahlteiler 7 des optischen Systems 6 möglich, dass eine Lichtquelle 4 Licht in den gemeinsamen Strahlengang 8 einleitet, während es der Detektionsvorrichtung 5 möglich ist, das von dem Ziel reflektierte Licht der Lichtquelle 4 innerhalb des gemeinsamen Strahlengangs 8 zu detektieren. Daher ist es mit der erfindungsgemäßen optischen Vorrichtung 1 möglich, sowohl den optischen Sensor 3 als auch die Lichtquelle 4 und die Detektionsvorrichtung 5 gemeinsam zu verwenden, da diese stets einen gemeinsamen Strahlengang 8 verwenden. Weiterhin ist es möglich, den optischen Sensor 3 und die Lichtquelle 4 derart miteinander zu verknüpfen, dass der Lichtquelle 4 ein Pixel des optischen Sensors 3 zugewiesen werden kann, so dass die Lichtquelle 4 genau den Bereich des Ziels beleuchtet, der auf dem zugewiesenen Pixel abgebildet wird. Die Zuweisung erfolgt über einen Retroreflektor 16, der über den dichroitischen Strahlteiler 7 Licht der Lichtquelle 4 mit einer geeigneten Wellenlänge auf den zugewiesenen Pixel des optischen Sensors 4 reflektiert. So ist eine optische Harmonisierung möglich. Die optische Harmonisierung von Lichtquelle 4 und optischem Sensor 3 kann bevorzugt auch über zusätzliche Lichtquellen realisiert sein, die insbesondere Licht aussenden, das sich von der Wellenlänge des Lichts der Lichtquelle unterscheidet. Sollte das zu beleuchtende Ziel kleiner als ein Pixel des optischen Sensors 3 sein, so ist die Lichtquelle 4 zusammen mit der Detektionsvorrichtung 5 eingerichtet, denjenigen Teil des Pixels zu bestimmen, der das Ziel abbildet.

Der optische Sensor 3, die Lichtquelle 4 und die Detektionsvorrichtung 5 sind mit einer Steuervorrichtung 10 verbunden, die eine heterodyne Detektion durchführt. Die heterodyne Detektion ist in Fig. 2 schematisch dargestellt. Das von der Detektionsvorrichtung 5 zu detektierende Licht ist als erstes Signal 11 repräsentiert, das von einem Mischer 15, bevorzugt von einer Photodiode, mit einem zweiten Signal 12, bevorzugt von der Lichtquelle 4 oder von einer alternativen Lichtquelle ausgesandt wird, gemischt wird. Das zweite Signal 12 ist bevorzugt ein vordefinierter harmonischer Oszillator. So entsteht ein Zwischensignal 13, das von der Steuervorrichtung 10 verarbeitbar ist. Da das zweite Signal 12 als harmonischer Oszillator bekannte Parameter aufweist, kann aus dem Zwischensignal 13 sehr einfach auf die Parameter des ersten Signals 11 geschlossen werden. Auf diese Weise ist eine sehr genaue Untersuchung des ersten Signals 11 und damit des reflektierten Lichts möglich. So ist eine sehr hohe Genauigkeit der Detektionsvorrichtung 5 erreichbar.

Beispielsweise kann der Suchkopf 2 in einer exo-atmosphärischen Abfangrakete angebracht sein. Das Spiegelteleskop 9 kann insbesondere eine Brennweite von ca. 600 mm und einen Durchmesser von 300 mm aufweisen, wobei dieses ab einer Entfernung von insbesondere 600 km die Lichtemission im infraroten Bereich des Ziels fokussiert. Somit kann bereits ab dieser Entfernung der optische Sensor 3 das Ziel erfassen. Damit ist eine erste Führung der Abfangrakete zu dem Ziel möglich, wenngleich diese noch sehr ungenau ist. Ab einer Entfernung von insbesondere 35 km ist es möglich, durch das Spiegelteleskop 9 das Ziel mittels der Lichtquelle 4 zu beleuchten. Durch die heterodyne Detektion des von der Detektionsvorrichtung 5 empfangenen Lichts, das ausgehend von der Lichtquelle 4 an dem Ziel reflektiert wurde, ist es nun möglich, zusätzliche präzise Informationen über Geschwindigkeit und/oder Entfernung des Ziels zu erlangen. Damit kann die Flugführung der Abfangrakete durch den Suchkopf 2 deutlich verbessert werden.

### Bezugszeichenliste

- 1: Optische Vorrichtung
- 2: Suchkopf
- 3: Optischer Sensor
- 4: Lichtquelle
- 5: Detektionsvorrichtung
- 6: Optisches System
- 60: Linse
- 7: Dichroitischer Strahlteiler
- 8: Gemeinsamer Strahlengang
- 9: Spiegelteleskop
- 10: Steuervorrichtung
- 11: Erstes Signal
- 12: Zweites Signal
- 13: Zwischensignal
- 14: Optische Strahlung
- 15: Mischer
- 16: Retroreflektor

## Patentansprüche

1. Optische Vorrichtung (1), insbesondere für einen Suchkopf (2) eines Flugkörpers, umfassend
- zumindest eine Lichtquelle (4),
- zumindest eine Detektionsvorrichtung (5), wobei die Detektionsvorrichtung (5) eingerichtet ist, das von der Lichtquelle (4) ausgesandte und an dem Gegenstand reflektierte Licht zu detektieren,
**gekennzeichnet durch**
- zumindest einen optischen Sensor (3) mit mehreren Pixeln, und
- ein optisches System (6), das einen dichroitischen Strahlteiler (7) aufweist, der eingerichtet ist, optische Strahlungen aus der Umgebung der optischen Vorrichtung (1) zu dem optischen Sensor (3) oder der Detektionsvorrichtung (5) aus einem gemeinsamen Strahlengang (8) zu trennen und das Licht der Lichtquelle (4) in den gemeinsamen Strahlengang (8) zu integrieren, und das einen Retroreflektor (16) aufweist, über den der optische Sensor (3) von der Lichtquelle (4) beleuchtbar ist,
- wobei die Lichtquelle (4) eingerichtet ist, durch das optische System (6) einen Gegenstand zu beleuchten, der durch das optische System (6) mindestens auf einem Teilbereich eines vordefinierten Pixels des optischen Sensors (3) abbildbar ist.

2. Optische Vorrichtung nach Anspruch 1, **dadurch gekennzeichnet, dass** die Lichtquelle (4) eine Laserquelle, bevorzugt eine Infrarot-Laserquelle, ist.

3. Optische Vorrichtung nach einem der vorhergehenden Ansprüche, **dadurch gekennzeichnet, dass** das optische System (6) eine Linsenoptik und/oder ein Spiegelteleskop (9) aufweist.

4. Optische Vorrichtung nach einem der vorhergehenden Ansprüche, **dadurch gekennzeichnet, dass** die Detektionsvorrichtung (5) mit einer Steuervorrichtung (10) verbunden ist, wobei die Steuervorrichtung eingerichtet ist, eine heterodyne Detektion und/oder eine homodyne Detektion der empfangenen optischen Strahlung auszuführen.

5. Optische Vorrichtung nach einem der vorhergehenden Ansprüche, wobei die Detektionsvorrichtung (5) einen oder mehrere Pixel und/oder zumindest einen Lichtleiter, aufweist.

6. Suchkopf (2) für einen Flugkörper, umfassend eine optische Vorrichtung (1) nach einem der vorhergehenden Ansprüche.

7. Verfahren zum Betreiben eines Suchkopfes (2) eines Flugkörpers, wobei der Suchkopf (2)
- zumindest eine Lichtquelle (4),
- zumindest eine Detektionsvorrichtung (5), weiche dazu eingerichtet ist, das von der Lichtquelle (4) ausgesandte und an dem Gegenstand reflektierte Licht zu detektieren,
- zumindest einen optischen Sensor (3) mit mehreren Pixeln, und ein optisches System (6), das einen dichroitischen Strahlteiler (7) aufweist, der eingerichtet ist, optische Strahlungen aus der Umgebung des Suchkopfes (2) zu dem optischen Sensor (3) oder der Detektionsvorrichtung (5) aus einem gemeinsamen Strahlengang (8) zu trennen und das Licht der Lichtquelle (4) in den gemeinsamen Strahlengang (8) zu integrieren, und das einen Retroreflektor (16) aufweist, über den der optische Sensor (3) von der Lichtquelle (4) beleuchtbar ist, umfasst, und
- wobei die Lichtquelle (4) eingerichtet ist, durch das optische System (6) einen Gegenstand zu beleuchten, der durch das optische System (6) mindestens auf einem Teilbereich eines vordefinierten Pixels des optischen Sensors (3) abbildbar ist, **gekennzeichnet durch** die folgenden Schritte:
- Erfassen eines Ziels mittels des optischen Sensors (3) und ausgeben einer ersten Richtung, in der sich das Ziel relativ zu dem Flugkörper befindet, sobald die Entfernung zwischen Ziel und Flugkörper einen ersten vordefinierten Wert unterschreitet,
- Beleuchten des Ziels mittels der Lichtquelle (4), sobald die Entfernung zwischen Ziel und Flugkörper einen zweiten vordefinierten Wert unterschreitet, und
- Detektieren des von der Lichtquelle (4) ausgesandten und von dem Ziel reflektierten Lichts durch die Detektionsvorrichtung (5) und Bestimmen mindestens einer der folgenden Größen:
∘ eine Entfernung zwischen Ziel und Flugkörper;
∘ eine zweite Richtung, in der sich das Ziel relativ zu dem Flugkörper befindet;
∘ eine Relativgeschwindigkeit zwischen Ziel und Flugkörper.

8. Verfahren nach Anspruch 7, **dadurch gekennzeichnet, dass** das Bestimmen der Entfernung durch Modulation und/oder Laufzeitmessung erfolgt.

9. Verfahren nach Anspruch 7 oder 8, **dadurch gekennzeichnet, dass** das Bestimmen der Geschwindigkeit mittels Dopplerverfahren erfolgt.

10. Verfahren nach einem der Ansprüche 7 bis 9, **dadurch gekennzeichnet, dass** das von der Detektionsvorrichtung detektierte Licht als erstes Signal (11) angesehen wird, das mit einem als vordefinierter harmonischer Oszillator ausgelegten zweiten Signal (12), bevorzugt optisch, gemischt wird, so dass ein Zwischensignal (13) entsteht, wobei aus dem Zwischensignat (13) eine Amplitude und/oder eine Frequenz und/oder eine Phase des ersten Signals (11) bestimmt wird.

11. Verfahren nach einem der Ansprüche 7 bis 10, **dadurch gekennzeichnet, dass** der erste vordefinierte Wert zumindest 600 Kilometer beträgt und/oder der zweite vordefinierte Wert zumindest 35 Kilometer beträgt.

## Claims

1. Optical device (1), in particular for a seeker (2) of a missile, comprising
- at least one light source (4),
- at least one detection device (5), wherein the detection device (5) is equipped to detect light emitted by the light source (4) and reflected from the object,
**characterised by**
- at least one optical sensor (3) with a plurality of pixels, and
- an optical system (6) exhibiting a dichroitic beam splitter (7) equipped for separating optical beams from the environment of the optical device (1) to the optical sensor (3) or the detection device (5) from a common beam path (8) and for integrating the light from the light source (4) into the common beam path (8), and exhibiting a retro-reflector (16) by means of which the optical sensor (3) can be illuminated from the light source (4),
- wherein the light source (4) is equipped to illuminate an object by means of the optical system (6), said object being depicted by the optical system (6) at least on a partial region of a predefined pixel of the optical sensor (3).

2. Optical device according to claim 1, **characterised in that** the light source (4) is a laser source, preferably an infrared laser source.

3. Optical device according to any one of the preceding claims, **characterised in that** the optical system (6) exhibits a lens optics and/or a reflecting telescope (9).

4. Optical device according to any one of the preceding claims, **characterised in that** the detection device (5) is connected to a control device (10) wherein the control device is equipped to execute heterodyne detection and/or homodyne detection of the received optical radiation.

5. Optical device according to any one of the preceding claims, wherein the detection device (5) exhibits one or more pixel(s) and/or at least one fibre-optic conductor.

6. Seeker (2) for a missile, comprising an optical device (1) according to any one of the preceding claims.

7. Method for operating a seeker (2) of a missile wherein the seeker (2) comprises
- at least one light source (4),
- at least one detection device (5) equipped to detect light emitted by the light source (4) and reflected from the object,
- at least one optical sensor (3) with a plurality of pixels, and an optical system (6) which exhibits a dichroic beam splitter (7) equipped for separating optical beams from the environment of the seeker (2) to the optical sensor (3) or the detection device (5) from a common beam path (8) and for integrating the light of the light source (4) into the common beam path (8), and exhibiting a retro-reflector (16) by means of which the optical sensor (3) can be illuminated from the light source (4), and
- wherein the light source (4) is equipped to illuminate by means of the optical system (6) an object which can be depicted by means of the optical system (6) at least on a partial region of a predefined pixel of the optical sensor (3), **characterised by** the following steps:
- recording of a target by means of the optical sensor (3) and outputting a first direction in which the target is located relative to the missile as soon as the distance between the target and missile is less than a first predefined value,
- illuminating the target by means of the light source (4) as soon as the distance between the target and missile is less than a second predefined value, and
- detecting the light emitted by the light source (4) and reflected from the target by means of the detection device (5) and determining at least one of the following values:
∘ a distance between target and missile;
∘ a second direction in which the target is located relative to the missile;
∘ a relative velocity between target and missile.

8. Method according to claim 7, **characterised in that** the determination of the distance is achieved by means of modulation and/or transit time measurement.

9. Method according to claim 7 or claim 8, **characterised in that** the determination of the velocity is achieved by means of the Doppler principle.

10. Method according to any one of claims 7 to 9, **characterised in that** the light detected by the detection device is treated as the first signal (11), which is mixed, preferably optically, with a second signal (12) designed as a predefined harmonic oscillator, so that an intermediate signal (13) occurs, wherein an amplitude and/or a frequency and/or a phase of the first signal (11) is determined from the intermediate signal (13).

11. Method according to any one of claims 7 to 10, **characterised in that** the first predefined value is at least 600 kilometres and/or the second predefined value is at least 35 kilometres.

## Revendications

1. Dispositif optique (1), notamment pour une tête de détection (2) d'un missile, comprenant :
- au moins une source lumineuse (4),
- au moins un dispositif de détection (5), le dispositif de détection (5) étant agencé pour détecter la lumière émise par la source lumineuse (4) et réfléchie sur l'objet,
**caractérisé par**
- au moins un capteur optique (3) doté de plusieurs pixels, et
- un système optique (6) qui présente un séparateur de faisceau dichroïque (7), lequel est agencé pour séparer des rayonnements optiques des environs du dispositif optique (1) vers le capteur optique (3) ou le dispositif de détection (5) à partir d'une trajectoire de faisceau (8) commune et pour intégrer la lumière de la source lumineuse (4) dans la trajectoire de faisceau (8) commune, et qui présente un rétroréflecteur (16) par l'intermédiaire duquel le capteur optique (3) peut être éclairé par la source lumineuse (4),
- la source lumineuse (4) étant agencée pour éclairer un objet au moyen du système optique (6), lequel objet est représentable au moins sur une zone partielle d'un pixel prédéfini du capteur optique (3) au moyen du système optique (6).

2. Dispositif optique selon la revendication 1, **caractérisé en ce que** la source lumineuse (4) est une source laser, de préférence une source laser à infrarouge.

3. Dispositif optique selon l'une quelconque des revendications précédentes, **caractérisé en ce que** le système optique (6) présente une optique à lentille et/ou un télescope à miroir (9).

4. Dispositif optique selon l'une quelconque des revendications précédentes, **caractérisé en ce que** le dispositif de détection (5) est relié à un dispositif de commande (10), le dispositif de commande étant agencé pour exécuter une détection hétérodyne et/ou une détection homodyne du rayonnement optique reçu.

5. Dispositif optique selon l'une quelconque des revendications précédentes, le dispositif de détection (5) présentant un ou plusieurs pixels et/ou au moins une fibre optique.

6. Tête de détection (2) pour un missile, comprenant un dispositif optique (1) selon l'une quelconque des revendications précédentes.

7. Procédé de fonctionnement d'une de détection (2) d'un missile, la tête de détection (2) comprenant :
- au moins une source lumineuse (4),
- au moins un dispositif de détection (5), le dispositif de détection (5) étant agencé pour détecter la lumière émise par la source lumineuse (4) et réfléchie sur l'objet,
- au moins un capteur optique (3) doté de plusieurs pixels, et un système optique (6) qui présente un séparateur de faisceau dichroïque (7), lequel est agencé pour séparer des rayonnements optiques des environs du dispositif optique (1) vers le capteur optique (3) ou le dispositif de détection (5) à partir d'une trajectoire de faisceau (8) commune et pour intégrer la lumière de la source lumineuse (4) dans la trajectoire de faisceau (8) commune, et qui présente un rétroréflecteur (16) par l'intermédiaire duquel le capteur optique (3) peut être éclairé par la source lumineuse (4), et
- la source lumineuse (4) étant agencée pour éclairer un objet au moyen du système optique (6), lequel objet est représentable au moins sur une zone partielle d'un pixel prédéfini du capteur optique (3) au moyen du système optique (6),
**caractérisé par** les étapes suivantes :
- détection d'une cible au moyen du capteur optique (3) et sortie d'une première direction dans laquelle la cible se trouve par rapport au missile, dès que la distance entre la cible et le missile dépasse vers le bas une première valeur prédéfinie,
- éclairage de la cible au moyen de la source lumineuse (4) dès que la distance entre la cible et le missile dépasse vers le bas une deuxième valeur prédéfinie, et
- détection, par le dispositif de détection (5), de la lumière émise par la source lumineuse (4) et réfléchie par la cible et détermination d'au moins une des grandeurs suivantes :
∘ une distance entre la cible et le missile ;
∘ une deuxième direction dans laquelle la cible se trouve par rapport au missile ;
∘ une vitesse relative entre la cible et le missile.

8. Procédé selon la revendication 7, **caractérisé en ce que** la détermination de la distance est réalisée par modulation et/ou mesure du temps de fonctionnement.

9. Procédé selon la revendication 7 ou 8, **caractérisé en ce que** la détermination de la vitesse est réalisée par procédé doppler.

10. Procédé selon l'une quelconque des revendications 7 à 9, **caractérisé en ce que** la lumière détectée par le dispositif de détection est considérée comme premier signal (11) qui est mélangé, de préférence optiquement, à un deuxième signal (12) conçu comme oscillateur harmonique prédéfini, de sorte qu'un signal intermédiaire (13) est obtenu, une amplitude et/ou une fréquence et/ou une phase du premier signal (111) étant déterminées à partir du signal intermédiaire (13).

11. Procédé selon l'une quelconque des revendications 7 à 10, **caractérisé en ce que** la première valeur prédéfinie s'élève à au moins 600 kilomètres et/ou **en ce que** la deuxième valeur prédéfinie s'élève à au moins 35 kilomètres.
